# EUROPEAN PATENT SPECIFICATION

(11) **EP 1 574 013 B1**
(45) Date of publication and mention of the grant of the patent: **17.06.2009**
(21) Application number: 03813434.2
(22) Date of filing: 12.12.2003
(51) Int. Cl.: H04L 29/06, H04L 12/22

(54) **CONTENT MANAGEMENT SYSTEM**
INHALTSVERWALTUNGSSYSTEM
SYSTEME DE GESTION DU CONTENU

(30) Priority: 13.12.2002 US 433264 P
(43) Date of publication of application: 14.09.2005
(73) Proprietor: Computer Associates Think, Inc., Islandia, New York 11749 (US)
(72) Inventor: HUTCHINSON, Robin, Kansas City, MO 64105 (US); GIUBILEO, John, Kansas City, MO 64105 (US); O'BRIEN, Darci, Kansas City, MO 64105 (US)
(74) Representative: Dunlop, Hugh Christopher
(86) International application number: PCT/US2003/039731
(87) International publication number: WO 2004/056069

(56) References cited:
- WO-A-01/29719
- WO-A-02/067171
- US-A1- 2002 065 885

## Description

### TECHNICAL FIELD

The present disclosure relates to content and, more specifically, to a content management system.

### DESCRIPTION OF THE RELATED ART

Today, computer network security is a matter of the utmost importance. Networks may include a wide range of security tools to provide a level of network security. Even with the use of such security tools, network vulnerabilities and configuration problems may still pose a potentially costly security risk.

Vulnerabilities are technology faults that have been discovered. Configuration standards are instructions for implementing and auditing specific technologies. People can be used to correct vulnerabilities and configuration standards. Policies can be used to help people known what to do and to provide a system of checks to make sure that the treatment of vulnerabilities runs efficiently and effectively.

To better manage the treatment of vulnerabilities and configuration standards, corrective measures may be divided into discrete tasks that are then distributed to individuals. Detailed procedures for identifying tasks, distributing tasks, acknowledging tasks, and capturing completion of tasks may help companies attain an acceptable level of risk through a repeatable process.

An example of a contact management system is discussed in US 2002/006585, in which an intelligent content manager automatically determines and then locates the representative(s) authorised to resolve an exeption when are is detected.

According to one aspect, the present invention provides an automated workflow system as set out in claim 1.

According to another aspect, the present invention provides a method for monitoring technology information for vulnerabilities as set out in the claim 8.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG, 1 shows a high-level view of the quality assurance process for vulnerabilities;
FIG. 2 shows a high-level view of the quality assurance process for Configuration Standards;
FIG. 3 shows a high-level view of the workflow for entering new policies into the CMS;
FIG. 4 shows a flow diagram for the introduction of new vulnerabilities into the CMS;
FIG. 5 shows a flow diagram detailing how a vulnerability is researched and documented;
FIG. 6 shows a flow diagram detailing how a vulnerability is validated;
FIG. 7 shows a flow diagram detailing how a vulnerability is approved and published; and
FIG. 8 illustrates an example of a computer system capable of implementing the method and apparatus of the present disclosure.

### DETAILED DESCRIPTION

In describing the preferred embodiments of the present disclosure illustrated in the drawings, specific terminology is employed for sake of clarity. However, the present disclosure is not intended to be limited to the specific terminology so selected, and it is to be understood that each specific element includes all technical equivalents which operate in a similar manner.

Vulnerabilities are technology faults that have been discovered. Configuration standards are instructions for implementing specific technologies. Vulnerabilities that go uncorrected can threaten network security by allowing an unauthorized person or program to access information technology systems, or assets, that are connected to the network. Configuration standards dictate how security features that protect network assets are configured. Poorly configured security features can also severely threaten network security.

Automated content management systems (CMS) are used to better manage the treatment of vulnerabilities and configuration standards that can threaten network security. According to an embodiment of the present disclosure, the CMS is a computer program, generally running on a computer, for example a network server, which organizes and manages the actions of individuals in their treatment of vulnerabilities and configuration standards. Individuals who use a CMS to manage the treatment of vulnerabilities and configuration standards are known as "users." Each user can be assigned one or more roles. A role dictates the types of tasks that may be assigned to an individual user. Roles can also be assigned to a responsibility group. A responsibility group is a category of users that share a particular skill set. Tasks that are assigned to a responsibility group can be completed by any member of that responsibility group.

The present disclosure relates to an automated CMS. According to an embodiment of the present disclosure, measures for correcting vulnerabilities and configuration standards are divided into discrete tasks that are then distributed to users according to their associated responsibility group. A task that has been completed by one user may then lead to a subsequent task being created for another user until the vulnerability or configuration has been satisfactorily remedied. When one task relating to the remediation of a specific vulnerability or configuration standard is completed by one user and as a result a second task relating to the remediation of the same specific vulnerability or configuration standard is created and assigned to a second user, for simplicity, this scenario is herein referred to in terms of the vulnerability being sent or routed from the one user to the second user. This propagation of tasks from user to user may be referred to as a workflow. According to an embodiment of the present disclosure, the CMS provides an automated workflow where new tasks are automatically created and assigned to users and completed tasks may automatically trigger the creation of subsequent tasks.

According to an embodiment of the present disclosure, the CMS includes a quality assurance (QA) process. The QA process allows the CMS to manage tasks through the-workflow to ensure that vulnerabilities and configuration standards are remedied with a repeatable high level of quality. The QA process associates roles with individual users.

During the process of working on tasks, users may generate content. Content can be text, computer code or anything else that may contribute to remediation of the vulnerability or configuration standard associated with the user's current task.

Users may implement corrections by creating new content or editing old content. When the user has completed a task and content has been changed, the CMS creates a new task for a user with a role of approver to review the changed content and potentially approve the changes made. According to embodiments of the present disclosure, there may be multiple approvers corresponding to multiple hierarchical approval levels. Changes made to content do not become effective until approved by a final approver. After content changes have been finally approved, the changed content is added to a content database. Subsequent tasks requiring access to the updated content will be able to pull the updated content off of the content database. If the changes are not approved, the changes are erased or stored for later editing and the content reverts to its prior state. In order to prevent multiple users from changing content at the same time, content may be locked while a user is currently working on a task and when the content is pending approval.

Each user may be assigned multiple tasks. Each user has a task list where all tasks assigned to that user are listed. The CMS assigns tasks to individual users or to a responsibility group and these tasks show up on the task lists of the appropriate users. The task list will also indicate the status of the tasks listed. A task has the status of open when the task is available to be completed by a user within the group the task is assigned to. A task has the status of personal when the task is currently being worked on by the user who's task list the task is listed on. A task has the status of locked when another user within the group is currently working on the task. The task list may also indicate the priority of the tasks listed. Priority is the level of importance of the task. For example, a task's priority may be high, medium, or low. The task list may also indicate the date the task was submitted to the CMS. The task list may also indicate the name of the task, the technology asset that the task affects, and/or the QA step the task is currently at. The QA step is an indication of how far along in the quality assurance process the vulnerability or configuration standard has come. When a task is referred to herein as being assigned to a user such as a reviewer, researcher, etc., it should be understood that the task may be assigned to a specific user or to a group of users with the specific roles of reviewer, researcher, etc.

A user may view a task listed on his or her task list. Viewing a task allows the user to see-the content associated with the task. A user viewing a task may not make changes to the corresponding content. Other viewers can still access the task and its content even when a user is currently viewing that task. The user may also open the task. When the task is open, the user is permitted to make changes to the corresponding content, however, other users may not open the opened task.

The user may change the order in which tasks are displayed in the task list by the use of a filter. Filters may display tasks by content type. Content type indicates if the task relates to a vulnerability or a configuration standard. Filters may also display tasks by status or priority.

According to an embodiment of the present disclosure, users may be assigned a level of experience. For example, the level of experience may indicate how much experience the user has in dealing with assigned tasks. The experience level of a user will help the CMS to determine how many levels of review are required before finally approving the content changes that user has made. For example, users with little experience may require more levels of review than more experienced users.

At each QA step, users may enter a reference name/number and a new technology name. The technology name and reference name/number identify what asset the vulnerability or configuration standard relates to. Changes made to names and references of assets are presented to an approver for approval and will not become effective until after final approval has been given. After final approval has been given, names and references will be added to the content database.

Embodiments of the present disclosure may use technology names that utilize a hierarchical structure to demonstrate the relationship between related assets. The technology name can include, for example, vendor name, product name, release number, minor release number, service pack number and/or other descriptive names. Vulnerabilities and configuration standards can relate to either a specific asset or a family of assets. When the vulnerability or configuration standard relates to a family of assets, the technology name used may be the technology name that includes all of the affected assets. For example, if a vulnerability relates to every release number for a given product name, that vulnerability may be identified with the vendor name and the product name.
If a vulnerability relates only to a specific minor release number, the technology name may be the vendor name, the product name, the release number and the minor release number. Remedial steps taken for a family of assets may be applied to all assets within that family.

Users who have opened a task may make additions to a workflow comment field that is part of the vulnerability or configuration standard's content. Workflow comments may be displayed along with content when a task is opened by a user. Workflow comments may be displayed with the most recent additions appearing first.

According to an embodiment of the present disclosure, each user may have an associated user account. The user account is maintained by an administrator of the CMS. The user account may store information such as the user's company name, login name and a password conforming to set password standards. Users login to the CMS in order to gain access to their task lists.

The CMS captures and stores CMS usage data. Data relating to the times users log in and out is recorded. The date vulnerabilities and configuration standards are submitted to the CMS is also recorded. The length of time for which the vulnerability or configuration standard is in the CMS may also be recorded. According to an embodiment of the present disclosure, this length of time is taken from the time the first task relating to the vulnerability or configuration standard is initiated to the time the task of final approval is completed. This information is particularly recorded for high priority vulnerabilities and configuration standards. Length of time data may also be recorded for all discrete tasks relating to all remediation. Recorded data may then be used to generate metrics such as a user activity report.

Users' accounts may be inactivated by the CMS administrator. When a user account is inactivated, all open tasks associated with that user will revert back to the user's group or will be reassigned.

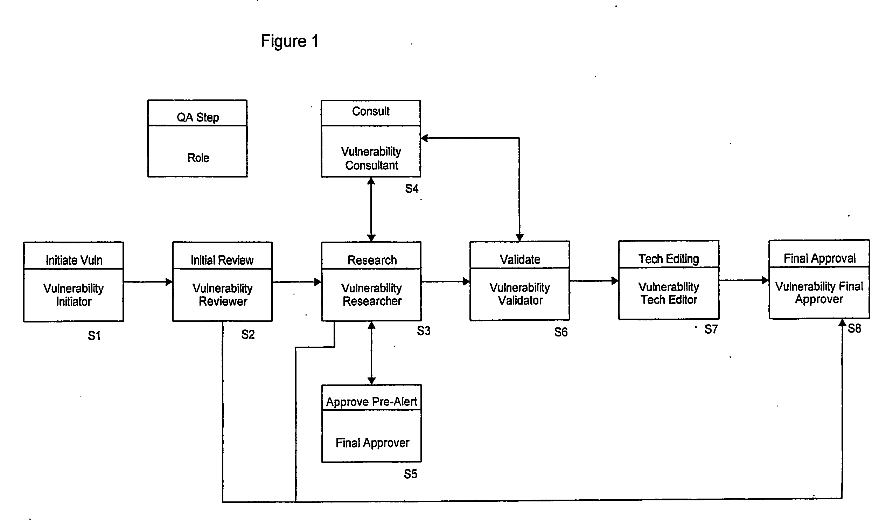

FIG. 1 shows a high-level view of the QA process relating to the remediation of vulnerabilities. The diagram specifies the QA step as well as the role of the user who may be assigned the task relating to that QA step. When a task is assigned to a user, that task will appear in the task list of that user. When vulnerabilities are sent to another user, a new task is created in the task list of that other user and the original task is completed. The first task, according to this embodiment of the present disclosure, is assigned to a user with a role of vulnerability initiator. The vulnerability initiator can initiate a new vulnerability (step S1). The vulnerability initiator may create content related to the new vulnerability. For example, the content may include a description of the vulnerability. In order to prevent unnecessary delay in the automated CMS, users may only have a task open for a set amount of time. For example, according to an embodiment of the present disclosure, vulnerability content may only be open for a period less than 48 hours or the vulnerability is unlocked and changes made to the content are lost. The user may be warned of this fact after having the vulnerability open for 24 hours.

After the vulnerability initiator initiates the new vulnerability (step S1), thereby completing the assigned task, a user with the role of vulnerability reviewer performs an initial review (step S2). Vulnerabilities to be reviewed will appear in the task list of the vulnerability reviewer who will review the vulnerability content. The initial reviewer may reject the vulnerability if, for example, the vulnerability already exists in the CMS or is known to not be a valid vulnerability. For example, a vulnerability may be known to not be a valid vulnerability if, for example, the same suspected vulnerability has in the past been rejected. If the vulnerability is rejected, the vulnerability may be sent to the task list of a vulnerability final approver for final rejection (step S8). Final rejection may end the remediation of the vulnerability. The vulnerability reviewer may also approve the vulnerability (step S2) thereby completing the assigned task. Approved vulnerabilities are then assigned to a user or group of users with a role of vulnerability researcher. If the task is assigned to a group of vulnerability researchers, the task may appear in each user's task list in the group until one user in the group opens the task at which point the other users in the group can no longer open the task. If the task is assigned to a specific user, only that user may open the task. The user who first opens the task may research the vulnerability and update the content accordingly (step S3). The researcher will either mark the vulnerability for rejection and send it to the final approver (step S8), send the vulnerability to a consultant (step S4), send the updated vulnerability content to a vulnerability validator (step S6) or mark the vulnerability with a pre-alert flag if the researcher believes the vulnerability to be a major vulnerability.
Vulnerabilities may be deemed major, for example, when they affect a major asset, the vulnerability has not yet been recognized by the vendor and no patch to correct the vulnerability exists or the vulnerability is serious and affects a variety of non-major assets. When the researcher, or a validator sends the vulnerability to a consultant, the consultant will assist in the research and validation process (step S4). The consultant can edit the vulnerability content and then send it back to the researcher for further research (step S3). The consultant may be any user affiliated with the management of the information technology to be managed or an individual not affiliated with the information technology to be managed. When the researcher marks the vulnerability with a pre-alert flag and submits the vulnerability back into the workflow, the final approver will receive the pre-alert in his or her task list (step S5). The final approver can approve the pre-alert or reject the pre-alert. In either case, the vulnerability is sent to the task list of the vulnerability researcher. When the vulnerability researcher determines that research is completed, the vulnerability is sent to the vulnerability validator (step S6). The vulnerability validator will validate the vulnerability content. This involves either, marking the vulnerability for rejection, sending the vulnerability to a consultant for consultation (step S4), returning the vulnerability to the researcher (step S3) to continue research or validating the vulnerability content. When the vulnerability validator validates the vulnerability content (step S6), the vulnerability is moved to the vulnerability technical editor's task list (step S7). The technical editor will edit the vulnerability content for format and clarity. The vulnerability is then sent to the task list of the vulnerability final approver (step S8). The vulnerability final approver will perform the final approval step where he or she has the ability to either reject the vulnerability, return the vulnerability to the researcher (step S3) to continue research or approve the vulnerability content. Vulnerability content that has been approved by the vulnerability final approver is added to the content database.

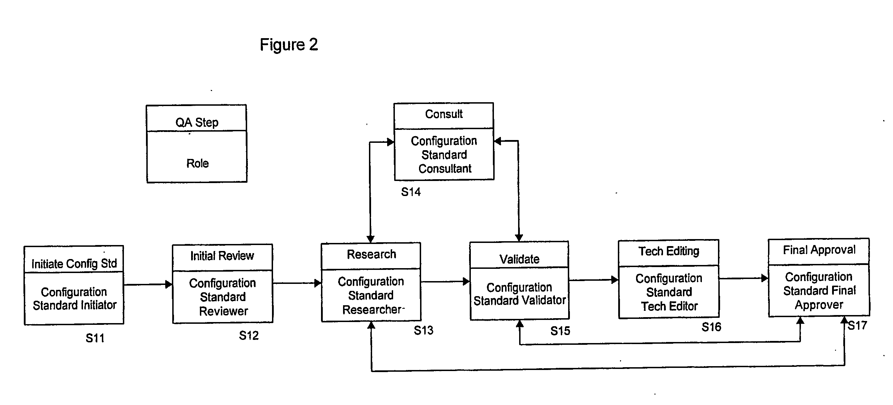

FIG. 2 shows a high-level view of the QA process for remediation of configuration standards. When one user sends a configuration standard to another user, thereby completing a task, a new task is created in the task list of that other user. The configuration standard initiator initiates a new configuration standard (step S11). While the configuration standard is being created, the configuration standard will be locked and no other users may open the configuration standard content. After the configuration standard has been initiated, it is sent to a configuration standard reviewer (step S 12). The configuration standard reviewer performs an initial, review of the configuration standard. The configuration standard reviewer may either assign the configuration standard to a research group or an individual researcher (step S13). The initial reviewer can also reject the configuration standard if, for example, it already exists in the CMS or is known to not be a valid configuration standard. The configuration standard researcher performs research on the configuration standard (step S 13). The configuration standard researcher has the ability to either mark the configuration standard for rejection and have the configuration standard presented to the final approver for rejection (step S17), send the configuration standard content to a consultant (step S14) or update the configuration standard content and send it to the configuration standard validator (step S15). The consultant may receive an email when the task enters his or her task list. The configuration standard consultant may assist in the research and validation of the configuration standard (step S 14). The consultant can edit the configuration standard content and then send it back to the researcher (step S13) or validator (step S14) depending on who sent it. If the consultant does not open the task within five days, the task will be returned to the researcher or validator who sent it. In step S 15, the configuration standard validator can either mark the configuration standard for rejection and have the configuration standard sent to the configuration standard final approver for final approval (step S17), send the configuration standard to consultant (step S14), return the configuration standard to the researcher (step S13) to continue the research or validate the configuration standard content and have it sent to the configuration standard technical editor (step S 16). In step S16, the configuration standard technical editor edits the configuration standard content for format and clarity and then sends it to the configuration standard final approver. In step S 17, the configuration standard final approver either rejects the configuration standard, returns it to the researcher (step S13) or validator (step S15) or approves the configuration standard content. Approved configuration standard content is added to the content database.

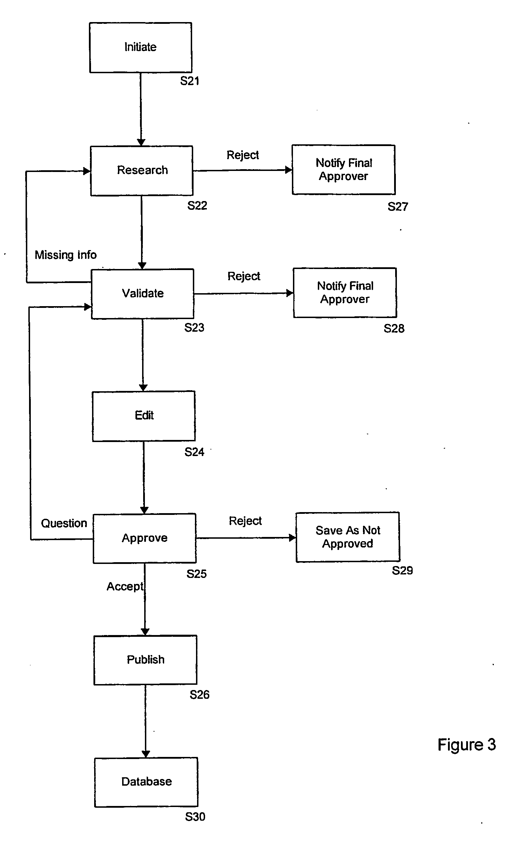

Policies are text documents that may be used to regulate the behavior of users. FIG. 3 shows a high-level view of the workflow for entering new policies into the CMS. During initiation (step S21), a user initiates a new content entry using a graphic user interface and the content is assigned to a user who is certified for handling the content type. This user will research the content (step S22) and may either reject it, sending it to the final approver (step S27), or send it to be validated (step S23). At the validation step S23, the validator can accept the content and forward it to a technical editor for editing (step S24). The validator can also reject the content and notify the final approver (step S28). If information is missing, the validator can return the content to the researcher for further research (step S22). During edit (step S24), the technical editor edits the content for format and clarity and sends it to an approval queue (step S25). The approval queue may be, for example, the task list of the approver. At the approval step S25, the approver can accept, reject or rout the submission back to the validator for additional information. If rejected, the submission is saved as not approved (step S29). If the approver has a question, the submission can be returned to the validator for further validation (step S23). If accepted by the approver, the content is sent to publishing (step S26). During publishing a research team can perform a final check prior to publication and then the content can be published to the content database (step S30).

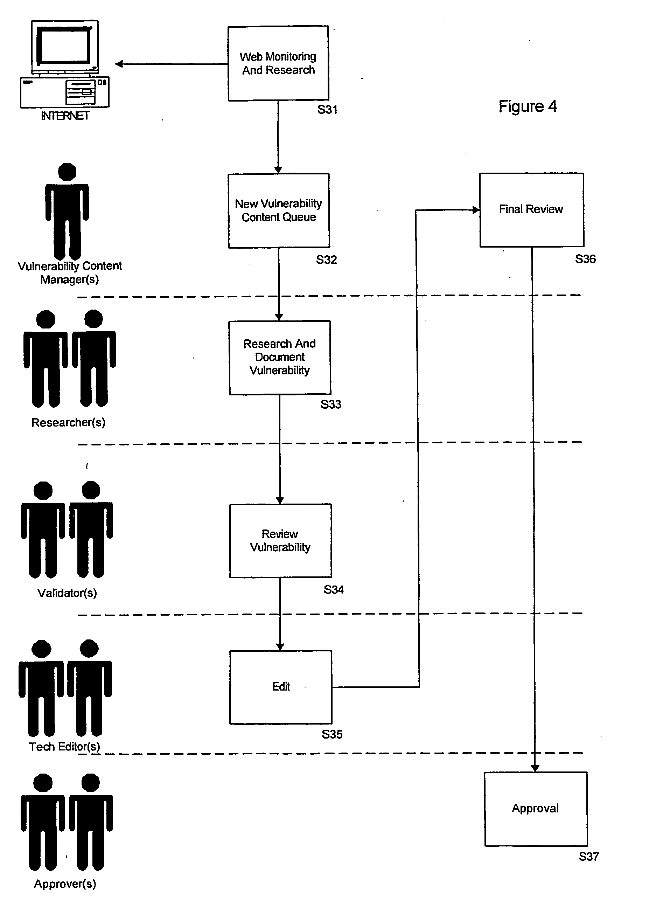

FIG. 4 shows a flow diagram for introducing of new vulnerabilities into the CMS. During web monitoring and research (step S31), a research team monitors internet newsgroups, mailing lists and alert services to obtain information about new vulnerabilities. When a potential vulnerability is recognized, a researcher submits vulnerability content to a content development initiation queue (step S32). The content development initiation queue may be, for example, part of the task list of the vulnerability content manager. If the vulnerability content manager deems the potential vulnerability to be major, a pre-alert notification is immediately issued. Vulnerabilities may be deemed major, for example, when they affect a major asset, the vulnerability has not yet been recognized by the vendor and no patch to correct the vulnerability exists or the vulnerability is serious and affects a variety of non-major assets. A content manager assigns each new vulnerability to an appropriate researcher for research. The researcher may analyze, test and/or document the potential vulnerability to verify that the vulnerability exists (step S33). If the vulnerability is deemed to be real, the researcher may add a unique description of the vulnerability to the vulnerability content. The researcher may also assign values to indicate the impact the vulnerability may have on assets, the popularity of the vulnerability and/or the complexity of the technique(s) necessary for exploiting the vulnerability. The researcher then may document any vendor patches for the vulnerability and/or any other countermeasures for mitigating the risk in the vulnerability content. The vulnerability is then sent to a validator, who reviews the vulnerability content for accuracy and completeness (step S34). A technical editor may then review the vulnerability content to ensure that the language is clear and that the style complies with set standards (step S35). The vulnerability content manager may then review the vulnerability content to ensure the information is accurate and complete (step S36). An approver can then perform a quality assurance check and then rout the vulnerability content back to the vulnerability content manager for publication to the content database (step S37).

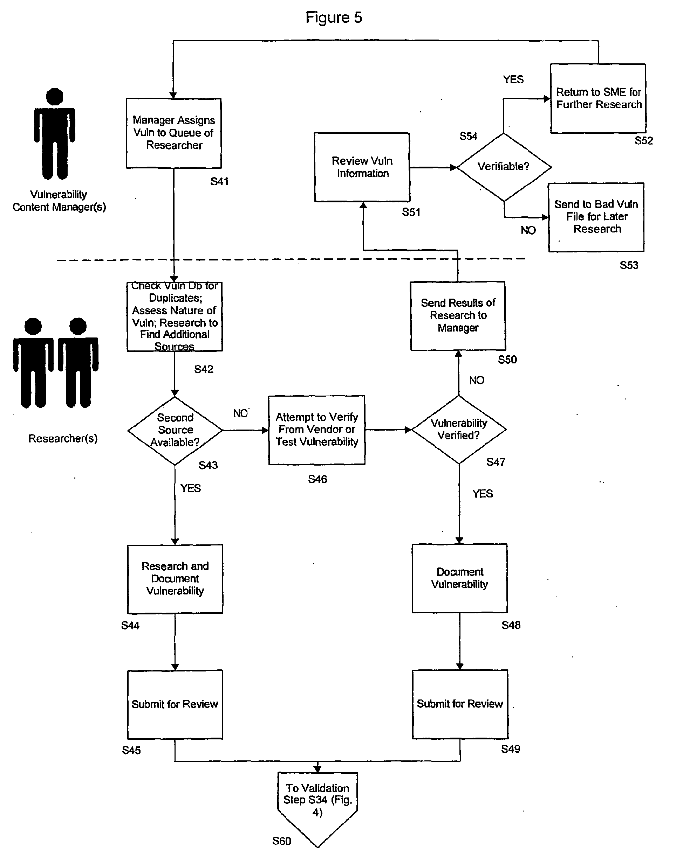

FIG. 5 shows a flow diagram providing more detail how a vulnerability is researched and documented as performed in step S33 of Fig. 4. After the vulnerability content manager assigns a vulnerability to the task list or queue of a researcher (step S41), the researcher checks the vulnerability database to see if the vulnerability has already been reported (step S42). The researcher may review the vulnerability and attempt to find additional sources establishing the same vulnerability (step S43). If a second source for the vulnerability can be found (yes, step S43) the researcher researches and documents the vulnerability (step S44). The researcher will then submit the vulnerability for review (step S45) and the vulnerability will proceed to validation (step S60). If no second source can be found (no, step S43), the researcher will attempt to verify the vulnerability with the vendor or test for the vulnerability (step S46). If the vulnerability can be verified (yes, step S47), the vulnerability is documented in the vulnerability content (step S48), submitted for review (step S49) and sent for validation (step S60). If the vulnerability cannot be verified (no, step S47), the results of the search are noted in the content and the vulnerability is sent to the vulnerability content manager (step S50). The content manager can review the vulnerability content (step S51) and return it for further research (step S52) if he believes the unverified vulnerability can be verified (YES, step S54). In the alternative, the content manager can send the vulnerability content to a file for unverified vulnerabilities for later research (step S53) if he believes that the unverified vulnerability can not be verified with additional research (NO, step S54).

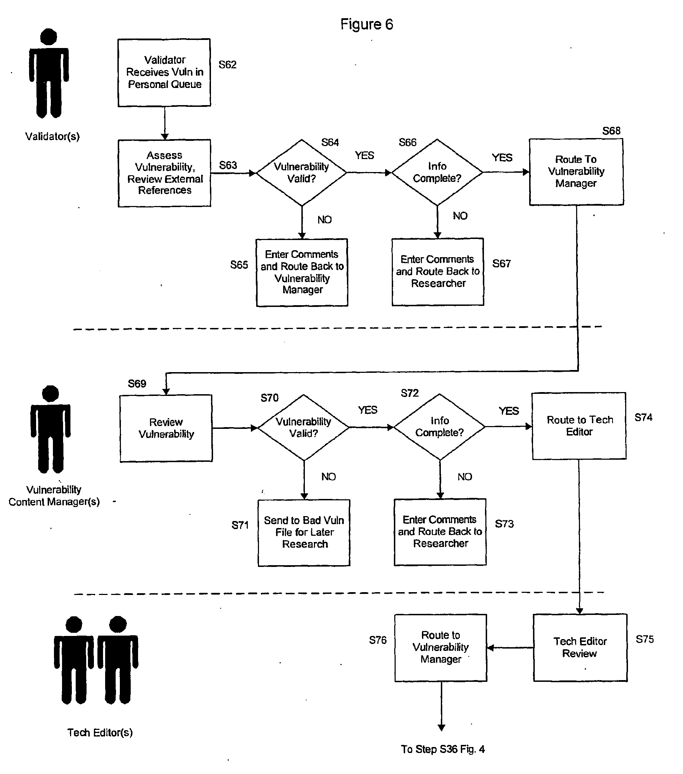

FIG. 6 shows a flow diagram providing more detail how a vulnerability can be validated and edited as performed in steps S34 and S35 of Fig. 4. The validator receives the vulnerability that has been sent for review in his or her task list (step S62). The validator assesses the nature of the vulnerability to determine the vulnerability's impact, popularity and simplicity of exploitation and may review any external references found by the researcher (step S63). If the validator determines that the vulnerability is not valid (no, step S64), the validator may enter comments into the vulnerability content and rout the vulnerability back to the vulnerability manager (step S65). If the validator determines that the vulnerability is valid (yes, step S64) the validator may determine if the information relating to the vulnerability is complete (step S66). If it is determined to be incomplete (no, step S66), comments may be entered into the vulnerability content and the vulnerability routed back to the researcher (step S67). If the vulnerability is determined to be complete (yes, step S66), the vulnerability may be routed (step S68) to the vulnerability content manager for review (step S69). If the vulnerability content manager determines that the vulnerability is invalid (no, step S70) it can be sent to an unverified vulnerability file for later research (step S71). If it is determined that the vulnerability is valid (yes, step S70), the vulnerability content manager can determine if the information relating to the vulnerability is complete (step S72). If it is not complete (no, step S72), comments may be added to the vulnerability content and the vulnerability routed back to the researcher (step S73). If it is complete (yes, step S74), the vulnerability can be routed (step S74) to the technical editor for review (step S75). The technical editor may edit the vulnerability content for language and conformity with set standards and then route the vulnerability (step S76) to the vulnerability manager for approval and publication.

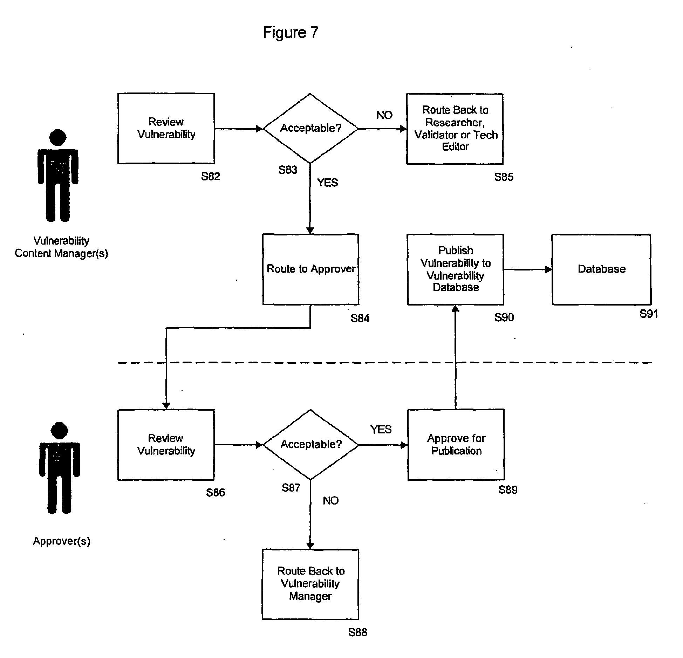

FIG. 7 shows a flow diagram providing more detail how a vulnerability is reviewed, approved and published as performed in steps S36 and S37 of Fig. 4. The vulnerability is received from the technical editor and reviewed by the vulnerability content manager (step S82). If for any reason the vulnerability is not acceptable (no, step S83), it can be routed back to the researcher, validator or technical editor for further research, validation and/or technical review (step S85). If the vulnerability is acceptable (yes, step S83) it can be routed (step S84) to the approver for review (step S86). If the approver finds the vulnerability to be unacceptable (no, step S87), the vulnerability is routed back to the vulnerability manager (step S88). If the approver finds the vulnerability to be acceptable (yes, step S87), the approver approves the vulnerability for publication (step S89) and sends the vulnerability to the vulnerability content manager for publication (step S90). The vulnerability content manager then publishes the vulnerability (step S91) to a vulnerability database.

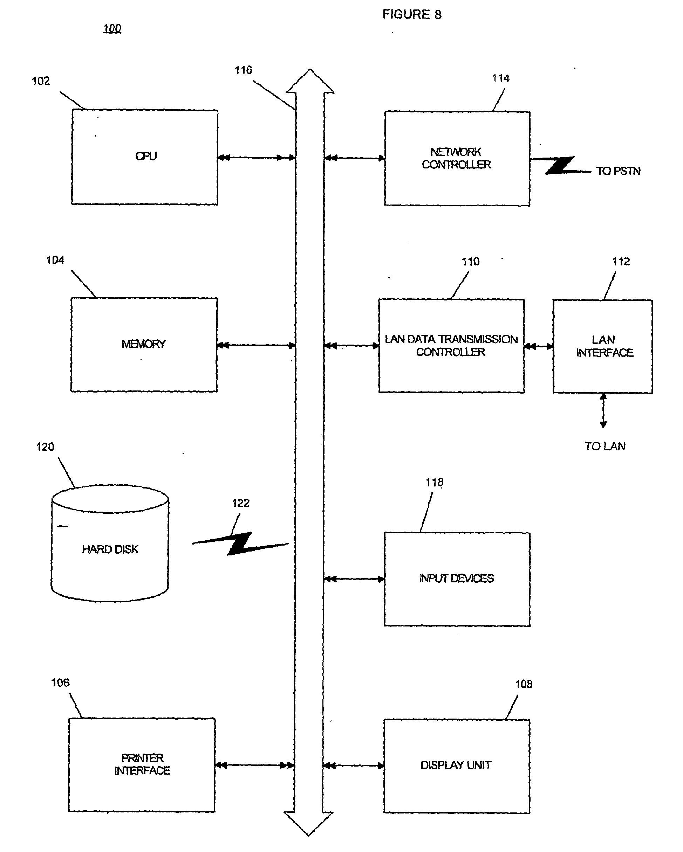

FIG. 8 shows an example of a computer system which may implement the method and system of the present disclosure. The system and method of the present disclosure may be implemented in the form of a software application running on a computer system, for example, a mainframe, personal computer (PC), handheld computer, server, etc. The software application may be stored on a recording media locally accessible by the computer system and accessible via a hard wired or wireless connection to a network, for example, a local area network, or the Internet.

The computer system referred to generally as system 100 may include, for example, a central processing unit (CPU) 102, random access memory (RAM) 104, a printer interface 106, a display unit 108, a local area network (LAN) data transmission controller 110, a LAN interface 112, a network controller 114, an internal buss 116, and one or more input devices 118, for example, a keyboard, mouse etc. As shown, the system 100 may be connected to a data storage device, for example, a hard disk, 120 via a link 122.

## Claims

1. An automated workflow system for monitoring technology information for vulnerabilities comprising:
a detector (102) for detecting a vulnerability, the vulnerability comprising content associated with the vulnerability;
a processor (102) operable to:
assign, for a plurality of users, one or more user roles and a list of tasks to perform according to the assigned one or more user roles, each task associated with the remediation of the vulnerability;
receive changes to the content associated with the vulnerability;
incorporate the received changes; and
remedy the vulnerability; and
a database (120) for storing:
a first task list associated with a first user, the first task list comprising a first task associated with the remediation of the vulnerability; and
a second task list associated with a second user;
wherein the processor (102) assigns a second task associated with the remediation of the vulnerability to the second task list in response to an indication that the first task associated with remediation of the vulnerability has been performed.

2. The system of claim 1, wherein one or more of the plurality of users are assigned to a group according to user roles, wherein one or more tasks associated with the remediation of the vulnerability is assigned to the group by the processor (102), and wherein any of the plurality of users assigned to the group may open the task through the processor (102), the task existing in a locked state while the task is open.

3. The system of claim 2, wherein the processor (102) is operable to receive workflow comments to the content associated with the vulnerability from the plurality of users.

4. The system of claim 1, wherein the user roles assigned to the plurality of users comprise:
a reviewer for reviewing the content associated with the vulnerability;
a researcher for researching the vulnerability content;
a validator for validating the vulnerability content; and
an editor for editing the content associated with the vulnerability.

5. The system of claim 1, wherein the user roles includes an approver for approving a change made to the vulnerability content, and wherein the content is updated with the change made to the content in response to the approver approving the change.

6. The system of claim 1, wherein technology information is added to the vulnerability content in a hierarchical structure, the technology information comprising:
vendor information;
product information; and
release information.

7. The system of claim 1, wherein the task lists include an indication of the priority levels of the tasks.

8. A method for monitoring technology information for vulnerabilities, the method comprising an automated workflow process of
detecting a vulnerability, the vulnerability comprising content associated with the vulnerability;
assigning user roles to a plurality of users;
assigning a first task associated with the remediation of the vulnerability to a first user according to a role associated with the first user;
determining whether a second task is to be created in response to the first task being performed by the first user;
creating a second task in response to determining that a second task is to be created; and
assigning the second task to a second user according to a role associated with the second user.

9. The method of claim 8, further comprising:
assigning one or more of the plurality of users to a group according to a user role;
assigning one or more tasks associated with the remediation of the vulnerability to the group, wherein any of the one or more of the plurality of users assigned to the group may open the task; and
locking the task in response to one of the plurality of users assigned to the group opening the task.

10. The method of claim 8, further comprising:
reviewing the content associated with the vulnerability;
researching the vulnerability content;
editing the content associated with the vulnerability.

11. The method of claim 8, further comprising approving a change made to the content associated with the vulnerability, wherein the content is updated with the change made to the content in response to the change.

12. The method of claim 8, further comprising adding technology information to the content associated with the vulnerability, wherein the technology information is added in a hierarchical structure, the technology information comprising:
vendor information;
product information; and
release information.

13. The method of claim 8, wherein the task lists include an indication of the priority levels of the tasks.

14. A computer readable medium including code for monitoring technology information for vulnerabilities, the code operable to configure an apparatus to perform the method of any one of claims 8 to 13.

## Patentansprüche

1. Automatisiertes Workflow-System zum Überwachen von Technologieinformationen für Schwachstellen umfassend:
einen Detektor (102) zum Erkennen einer Schwachstelle, wobei die Schwachstelle Inhalt umfasst, der der Schwachstelle zugeordnet ist;
einen Prozessor (102), der betreibbar ist für:
das Zuweisen, für eine Mehrzahl von Benutzern, einer oder mehrerer Benutzerrollen und einer Liste von Aufgaben, um jede Aufgabe, die dem Beheben der Schwachstelle zugeordnet ist, gemäß der zugeordneten einen oder mehreren Benutzerrollen auszuführen;
das Erhalten von Änderungen an dem der Schwachstelle zugeordneten Inhalt;
das Integrieren der erhaltenen Änderungen; und
das Beheben der Schwachstelle; und eine Datenbank (120) zum Speichern:
einer ersten Aufgabenliste, die einem ersten Benutzer zugeordnet ist, wobei die erste Aufgabenliste eine erste Aufgabe umfasst, die dem Beheben der Schwachstelle zugeordnet ist; und
einer zweiten Aufgabenliste, die einem zweiten Benutzer zugeordnet ist;
wobei der Prozessor (102) eine zweite Aufgabe, die dem Beheben der Schwachstelle zugeordnet ist, der zweiten Aufgabenliste zuweist, in Reaktion auf eine Angabe, dass die erste Aufgabe, die dem Beheben der Schwachstelle zugeordnet ist, ausgeführt wurde.

2. System nach Anspruch 1, wobei einer oder mehrere der Mehrzahl von Benutzern gemäß Benutzerrollen einer Gruppe zugeordnet werden, wobei eine oder mehrere Aufgaben, die dem Beheben der Schwachstelle zugeordnet sind, der Gruppe durch den Prozessor (102) zugewiesen werden, und wobei ein beliebiger der Mehrzahl von Benutzern, die der Gruppe zugeordnet sind, die Aufgabe über den Prozessor (102) öffnen kann, wobei die Aufgabe in einem gesperrten Status ist, während die Aufgabe geöffnet ist.

3. System nach Anspruch 2, wobei der Prozessor (102) betreibbar ist, um Workflow-Kommentare zum Inhalt, der der Schwachstelle zugeordnet ist, von der Mehrzahl von Benutzern zu erhalten.

4. System nach Anspruch 1, wobei die Benutzerrollen, die der Mehrzahl von Benutzern zugeordnet sind, Folgendes umfassen:
einen Prüfer zum Prüfen des der Schwachstelle zugeordneten Inhalts;
einen Untersucher zum Untersuchen des Schwachstelleninhalts;
einen Bewerter zum Bewerten des Schwachstelleninhalts; und
einen Editor zum Bearbeiten des der Schwachstelle zugeordneten Inhalts.

5. System nach Anspruch 1, wobei die Benutzerrollen einen Genehmigenden zum Genehmigen einer Änderung umfassen, die an dem Schwachstelleninhalt vorgenommen wurde, und wobei der Inhalt mit der Änderung, die in Reaktion auf die Genehmigung der Änderung durch den Genehmigenden an dem Inhalt vorgenommen wurde, aktualisiert wird.

6. System nach Anspruch 1, wobei die Technologieinformationen zu dem Schwachstelleninhalt in einer hierarchischen Struktur hinzugefügt werden,
wobei die Technologieinformationen Folgendes umfassen:
Verkäuferinformationen;
Produktinformationen; und
Versionsinformationen.

7. System nach Anspruch 1, wobei die Aufgabenlisten eine Angabe der Prioritätsebenen der Aufgaben umfassen.

8. Verfahren zum Überwachen von Technologieinformationen für Schwachstellen, wobei das Verfahren einen automatisierten Workflow-Prozess umfasst für:
das Erkennen einer Schwachstelle, wobei die Schwachstelle Inhalt umfasst, der der Schwachstelle zugeordnet ist;
das Zuweisen von Benutzerrollen zu einer Mehrzahl von Benutzern;
das Zuweisen einer ersten Aufgabe, die dem Beheben der Schwachstelle zugeordnet ist, zu einem ersten Benutzer gemäß einer dem ersten Benutzer zugeordneten Rolle;
das Bestimmen, ob eine zweite Aufgabe in Reaktion darauf, dass die erste Aufgabe vom ersten Benutzer ausgeführt wird, erstellt wird;
das Erstellen einer zweiten Aufgabe in Reaktion auf das Bestimmen, dass eine zweite Aufgabe erstellt wird; und
das Zuweisen der zweiten Aufgabe zu einem zweiten Benutzer gemäß einer dem zweiten Benutzer zugeordneten Rolle.

9. Verfahren nach Anspruch 8, ferner umfassend:
das Zuweisen eines oder mehrerer der Mehrzahl von Benutzern zu einer Gruppe gemäß einer Benutzerrolle;
das Zuweisen einer oder mehrerer Aufgaben, die dem Beheben der Schwachstelle zugeordnet sind, zu der Gruppe, wobei ein beliebiger einer oder mehrere der Mehrzahl von Benutzern, die der Gruppe zugeordnet sind, die Aufgabe öffnen können; und
Sperren der Aufgabe in Reaktion darauf, dass einer der Mehrzahl von Benutzern, die der Gruppe zugeordnet sind, die Aufgabe öffnet.

10. Verfahren nach Anspruch 8, ferner umfassend:
das Prüfen des der Schwachstelle zugeordneten Inhalts;
das Untersuchen des Schwachstelleninhalts;
das Bearbeiten des der Schwachstelle zugeordneten Inhalts.

11. Verfahren nach Anspruch 8, ferner umfassend das Genehmigen einer Änderung, die an dem der Schwachstelle zugeordneten Inhalt vorgenommen wurde, wobei der Inhalt mit der Änderung, die an dem Inhalt in Reaktion auf die Änderung vorgenommen wurde, aktualisiert wird.

12. Verfahren nach Anspruch 8, ferner umfassend das Hinzufügen von Technologieinformationen zu dem der Schwachstelle zugeordneten Inhalt, wobei die Technologieinformationen in hierarchischer Struktur hinzugefügt werden, wobei die Technologieinformationen Folgendes umfassen:
Verkäuferinformationen;
Produktinformationen; und
Versionsinformationen.

13. Verfahren nach Anspruch 8, wobei die Aufgabenlisten eine Angabe der Prioritätsebenen der Aufgaben umfassen.

14. Computer-lesbares Medium umfassend Code zum Überwachen von Technologieinformationen für Schwachstellen, wobei der Code betreibbar ist, um eine Vorrichtung zu konfigurieren, um das Verfahren nach einem der Ansprüche 8 bis 13 auszuführen.

## Revendications

1. Système d'automatisation de flux de travaux pour surveiller des informations technologiques relativement aux vulnérabilités comprenant :
un détecteur (102) pour détecter une vulnérabilité, la vulnérabilité comprenant du contenu qui lui est associé ;
un processeur (102) apte à :
attribuer, pour plusieurs utilisateurs, un ou plusieurs rôles d'utilisateur et une liste de tâches à exécuter conformément au rôle ou aux rôles d'utilisateur, chaque tâche étant associée à la remédiation de la vulnérabilité ;
recevoir des changements apportés au contenu associé à la vulnérabilité ;
incorporer les changements reçus ; et
remédier à la vulnérabilité ; et
une base de données (120) pour stocker :
une première liste de tâches associée au premier utilisateur, la première liste de tâches comprenant une première tâche associée à la remédiation de la vulnérabilité ; et
une seconde liste de tâches associée à un second utilisateur ;
le processeur (102) attribuant une seconde tâche associée à la remédiation de la vulnérabilité à la seconde liste de tâches en réponse à une indication selon laquelle la première tâche associée à la remédiation de la vulnérabilité à été exécutée.

2. Système conformément à la revendication 1, dans lequel le ou les utilisateurs sont attribués à un groupe conformément aux rôles d'utilisateur, dans lequel le ou les tâches associées à la remédiation de la vulnérabilité sont attribuées au groupe par le processeur (102), et dans lequel l'un quelconque des utilisateurs attribués au groupe peut ouvrir la tâche par l'intermédiaire du processeur (120), la tâche existant dans un état verrouillé lorsque la tâche est ouverte.

3. Système conformément à la revendication 2, dans lequel le processeur (102) est apte à recevoir des commentaires de flux de travaux apportés au contenu associé à la vulnérabilité par les utilisateurs.

4. Système conformément à la revendication 1, dans lequel les rôles d'utilisateur attribués aux utilisateurs comprennent :
un réviseur pour réviser le contenu associé à la vulnérabilité ;
un chercheur pour rechercher le contenu de vulnérabilité ;
un validateur pour valider le contenu de vulnérabilité ; et
un éditeur pour éditer le contenu associé à la vulnérabilité.

5. Système conformément à la revendication 1, dans lequel les rôles d'utilisateur comprennent un approbateur pour approuver un changement apporté au contenu de vulnérabilité, et dans lequel le contenu est mis à jour avec le changement apporté au contenu en réponse à l'approbateur approuvant le changement.

6. Système conformément à la revendication 1, dans lequel les informations technologiques sont ajoutées au contenu de vulnérabilité dans une structure hiérarchique, les informations technologiques comprenant :
des informations de fournisseur ;
des informations de produit ; et
des informations de parution.

7. Système conformément à la revendication 1, dans lequel la liste de tâches comprend une indication des niveaux de priorité des tâches.

8. Procédé pour surveiller des informations technologiques relativement à des vulnérabilités, procédé comprenant un traitement automatisé de flux de travaux comprenant les étapes consistant à :
détecter une vulnérabilité, la vulnérabilité comprenant du contenu qui lui y associé ;
attribuer des rôles d'utilisateur à plusieurs utilisateurs ;
attribuer une première tâche associée à la remédiation de la vulnérabilité à un premier utilisateur conformément à un rôle associé au premier utilisateur ;
déterminer si une seconde tâche doit ou non être crée en réponse à la première tâche exécutée par le premier utilisateur ;
créer une seconde tâche en réponse à la détermination selon laquelle une seconde tâche doit être créée ; et
attribuer la seconde tâche à un second utilisateur conformément à un rôle associé au second utilisateur.

9. Procédé conformément à la revendication 8 comprenant en outre les étapes consistant à :
attribuer un ou plusieurs des utilisateurs à un groupe conformément à un rôle d'utilisateur ;
attribuer une ou plusieurs tâches associées à la remédiation de la vulnérabilité du groupe, l'un quelconque du ou des utilisateurs attribués au groupe pouvant ouvrir la tâche ; et
verrouiller la tâche en réponse à l'un des utilisateurs attribués au groupe ouvrant la tâche.

10. Procédé conformément à la revendication 8 comprenant en outre les étapes consistant à :
réviser le contenu associé à la vulnérabilité ;
rechercher le contenu de vulnérabilité ;
éditer le contenu associé à la vulnérabilité.

11. Procédé conformément à la revendication 8 comprenant en outre une approbation d'un changement apporté au contenu associé à la vulnérabilité, dans lequel le contenu est mis à jour avec le changement apporté au contenu en réponse au changement.

12. Procédé conformément à la revendication 8 comprenant en outre l'ajout d'informations technologiques au contenu associé à la vulnérabilité, dans lequel les informations technologiques sont ajoutées dans une structure hiérarchique, les informations technologiques comprenant :
des informations de fournisseur ;
des informations de produits ; et
des informations de parution.

13. Procédé conformément à la revendication 8, dans lequel la liste de tâches comprend une indication des niveaux de priorité des tâches.

14. Support lisible par ordinateur comprenant un code pour surveiller des informations technologiques relativement à des vulnérabilités, le code étant apte à configurer un appareil pour exécuter le procédé selon l'une quelconque des revendications 8 à 13.
